# EUROPÄISCHE PATENTANMELDUNG

(11) **EP 1 245 510 A1**
(43) Veröffentlichungstag der Anmeldung: **02.10.2002**
(21) Anmeldenummer: 02000509.6
(22) Anmeldetag: 09.01.2002
(51) Int. Cl.: B65G 19/24

(54) **Zahnriemen mit Mitnehmern**

(30) Priorität: 27.03.2001 DE 10114948
(71) Anmelder: Nienstedt GmbH, 45721 Haltern (DE)
(72) Erfinder: Rosenberger, Jörg, 48734 Reken (DE)
(74) Vertreter: COHAUSZ DAWIDOWICZ HANNIG & PARTNER

(57) **Zusammenfassung**

Die Erfindung betrifft einen Zahnriemen mit Mitnehmern an der Riemenoberseite für den Transport von Wagen insbesondere von Formwagen. Im Bereich des Mitnehmers ist an beiden Seiten des Zahnriemens je eine Platte insbesondere ein Blech befestigt, das seitlich an dem Riemen, an den Zähnen des Riemens und an dem Mitnehmer anliegt und an den Zähnen und dem Mitnehmer befestigt ist.

## Beschreibung

Die Erfindung betrifft einen Zahnriemen mit Mitnehmern an der Riemenoberseite für den Transport von Wagen insbesondere von Formwagen.

Es ist bekannt, auf der Oberseite eines Zahnriemens Mitnehmer anzukleben oder anzuschweißen, die nach oben vorstehen und in Ausnehmungen von Transportwagen hineinreichen, um diese zu bewegen. Hierbei hat es sich gezeigt, dass die Mitnehmer nach einiger Zeit sich von dem Zahnriemen lösen können.

Aufgabe der Erfindung ist es, die Befestigung von Mitnehmern an Zahnriemen so zu verbessern, dass die Mitnehmer auch dann sicher am Riemen befestigt bleiben, wenn durch die zu transportierenden Wagen erhebliche Querkräfte auf die Mitnehmer ausgeübt werden.

Diese Aufgabe wird erfindungsgemäß dadurch gelöst, dass im Bereich des Mitnehmers an beiden Seiten des Zahnriemens je eine Platte insbesondere ein Blech befestigt ist, das seitlich an dem Riemen, an den Zähnen des Riemens und an dem Mitnehmer anliegt und an den Zähnen und dem Mitnehmer befestigt ist.

Durch die zusätzlichen seitlichen Platten sind die Mitnehmer so sicher am Riemen und insbesondere auch an den unteren Zähnen des Riemens befestigt, dass ein Lösen der Mitnehmer sicher verhindert wird. Hierbei ist die Konstruktion einfach und leicht montierbar.

Vorzugsweise wird vorgeschlagen, dass die Platten/Bleche in Längsrichtung des Zahnriemens und zueinander parallel angeordnet sind. Auch ist von besonderem Vorteil, wenn die zwei Platten/Bleche eines Mitnehmers durch quer zur Riemenlängsrichtung angeordnete Bolzen aneinander befestigt sind, von denen mindestens einer durch einen Zahn verläuft. Hierbei kann mindestens ein Bolzen durch den Mitnehmer verlaufen.

Ein besonders sicherer Halt ist gegeben, wenn im verbreiterten Fuß des Mitnehmers zwei Bolzen einliegen, von denen einer in der Fußvorderseite und einer in der Fußrückseite angeordnet ist. Auch wird vorgeschlagen, dass der Mitnehmer mittig über einem Zahn angeordnet ist und die zwei zu diesem Zahn zu beiden Seiten benachbarten Zähne von je einem Bolzen durchdrungen sind.

Von Vorteil ist es, wenn die Platte/das Blech Bohrungen aufweist, in denen die Enden der Bolzen einliegen. Hierbei kann der Abstand der beiden Bohrungen voneinander auf einer Seite der Platte/des Bleches größer sein als der Abstand der einliegenden Bolzen vor der Befestigung der Platte/des Bleches. Dies erleichtert ein Biegen des Zahnriemens im Bereich des Mitnehmers, so dass der Zahnriemen leicht um eine Umlenkrolle laufen kann.

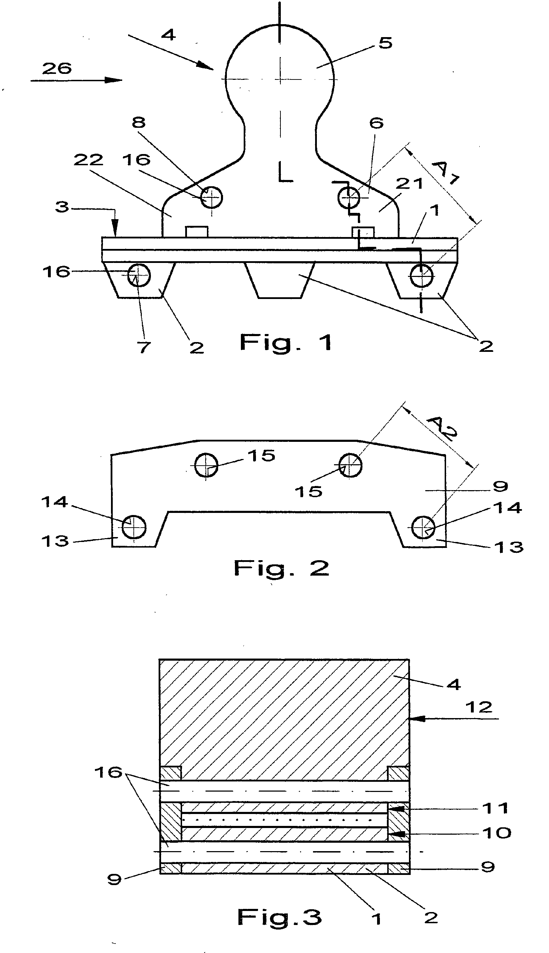

Ein Ausführungsbeispiel der Erfindung ist in der Zeichnung dargestellt und wird im folgenden näher beschrieben. Es zeigen
- Fig. 1: einen senkrechten Längsschnitt durch den Zahnriemen mit aufgesetztem Mitnehmer,
- Fig. 2: eine Seitenansicht der Platte und
- Fig. 3: einen Querschnitt durch Zahnriemen, Mitnehmer und Platten.

Ein insbesondere durch innere Bewehrungen verstärkter Zahnriemen 1 weist an seiner Unterseite in regelmäßigen Abständen quer zur Längsrichtung angeordnete Zähne 2 auf, die am Zahnriemen angeformt sind. Auf der flachen Oberseite 3 des Zahnriemens sind Mitnehmer 4 befestigt, die als Profile sich quer zur Längsrichtung erstrecken und einen oberen zylindrischen Kopf 5 bilden, der in einer Ausnehmung an der Unterseite eines nicht dargestellten Wagens hineinreicht, um diesen zu transportieren. Der Wagen bildet als Formwagen eine Form, insbesondere zur Ausformung von Lebensmitteln.

Der Fuß 6 des Mitnehmers 4 ist erheblich breiter ausgeführt als die Breite des Kopfes 5. Insbesondere ist die Fußbreite BF mindestens doppelt so groß wie die Kopfbreite BK.

Der Fuß 6 weist eine ebene Unterseite auf, mit dem er auf der Oberseite 3 des Zahnriemens 1 befestigt ist. Im Ausführungsbeispiel ist der Mitnehmer 4 mittig über einem Zahn 2 befestigt und der Fuß 6 ist so breit ausgeführt, dass er die benachbarten zwei Zähne noch jeweils teilweise überdeckt.

In den zwei benachbarten teilweise überdeckten Zähnen 2 ist jeweils eine Bohrung 7 bzw. ein Längsloch waagerecht und quer zur Längsrichtung des Zahnriemens angeordnet. Ferner befinden sich im Fuß 6 des Mitnehmers 4 zwei Bohrungen 8, die sich oberhalb der Mitte zwischen zwei Zähnen 2 befinden. Damit ist der Abstand zwischen den Bohrungen 8 geringer als zwischen den Bohrungen 7.

Zu beiden Seiten des Zahnriemens 1 sind in Höhe des Mitnehmers 4 Platten 9 insbesondere aus Blech befestigt, die in entsprechend geformten seitlichen Ausnehmungen 10 des Zahnriemens 1 einliegen, so dass sie mit ihren Außenseiten bündig mit dem Seitenrand des Zahnriemens abschließen. In gleicher Weise bilden die Mitnehmer 4 Ausnehmungen 11 an beiden Stirnseiten, so dass auch die Stirnseiten 12 bündig zu der Außenseite der Platte 9 abschließen.

Die Platte 9 bildet an ihrer Unterseite an ihren beiden Enden jeweils einen Vorsprung 13, der jeweils seitlich bzw. stirnseitig einen Zahn 2 überragt. In diesen Vorsprüngen 13 ist jeweils eine Bohrung 14 und im oberen Bereich der Platte 9 sind jeweils zwei weitere Bohrungen 15 in der Platte eingebracht. Hierbei fluchten die Bohrungen 15 mit den Bohrungen 8 des Mitnehmerfußes 6. Ferner fluchten die Bohrungen 14 der Platte 9 mit den Bohrungen 7 in den Zähnen 2. In diesen Bohrungen liegen jeweils Bolzen 16 ein, die die Platten seitlich nicht überragen, so dass die Platte 9 durch diese vier Bolzen 16 am Zahnriemen 1 und am Mitnehmer 4 befestigt sind. Dies führt zu einem sicheren Halt des Mitnehmers 4 am Zahnriemen 1.

Mit dem Pfeil 20 ist die Bewegungsrichtung des Zahnriemens dargestellt. Aufgrund dieser Bewegungsrichtung kann von der Fußvorderseite 21 und der Fußrückseite 22 gesprochen werden. In der Fußvorderseite 21 ist eine Bohrung 8 und in der Fußrückseite 22 eine Bohrung 8 angeordnet. Zu jeder dieser beiden Bohrungen gehört eine schräg darunter liegende Bohrung 7 der Zähne 2. An der Fußvorderseite 21 bilden damit die Bohrungen 7 und 8 ein Bohrungspaar und ein gleiches Bohrungspaar befindet sich im Bereich der Fußrückseite 22. Der Abstand A1 der beiden Bohrungen 7 und 8 eines Bohrungspaares ist nicht derselbe Abstand wie der Abstand A2 der dazugehörigen zwei Bohrungen 14 und 15 in der Platte 9. Vielmehr ist der Abstand A2 etwas größer insbesondere um 0,5 bis 2 mm als der Abstand A1, so dass die Platte 9 sowohl im vorderen Bereich als auch im hinteren Bereich die beiden Bolzen 16 auseinander gedrückt und damit eine leichte Biegung des Zahnriemens 1 im Bereich des Mitnehmers 4 erzeugt wird, so dass auch im Bereich des Mitnehmers der Zahnriemen leicht biegbar und damit um eine Umlenkrolle führbar ist.

## Patentansprüche

1. Zahnriemen (1) mit Mitnehmern (4) an der Riemenoberseite für den Transport von Wagen insbesondere von Formwagen, **dadurch gekennzeichnet, dass** im Bereich des Mitnehmers (4) an beiden Seiten des Zahnriemens (1) je eine Platte insbesondere ein Blech (9) befestigt ist, das seitlich an dem Riemen (1), an den Zähnen (2) des Riemens und an dem Mitnehmer (4) anliegt und an den Zähnen und dem Mitnehmer befestigt ist.

2. Zahnriemen nach Anspruch 1, **dadurch gekennzeichnet, dass** die Platten/Bleche (9) in Längsrichtung des Zahnriemens (1) und zueinander parallel angeordnet sind.

3. Zahnriemen nach Anspruch 1 oder 2, **dadurch gekennzeichnet, dass** die zwei Platten/Bleche (9) eines Mitnehmers (4) durch quer zur Riemenlängsrichtung angeordnete Bolzen (16) aneinander befestigt sind, von denen mindestens einer durch einen Zahn (2) verläuft.

4. Zahnriemen nach Anspruch 3, **dadurch gekennzeichnet, dass** mindestens ein Bolzen (16) durch den Mitnehmer (4) verläuft.

5. Zahnriemen nach einem der vorherigen Ansprüche, **dadurch gekennzeichnet, dass** im verbreiterten Fuß (6) des Mitnehmers (4) zwei Bolzen (16) einliegen, von denen einer in der Fußvorderseite (21) und einer in der Fußrückseite (22) angeordnet ist.

6. Zahnriemen nach einem der vorherigen Ansprüche, **dadurch gekennzeichnet, dass** der Mitnehmer (4) mittig über einem Zahn (2) angeordnet ist und die zwei zu diesem Zahn zu beiden Seiten benachbarten Zähne (2) von je einem Bolzen (16) durchdrungen sind.

7. Zahnriemen nach einem der vorherigen Ansprüche, **dadurch gekennzeichnet, dass** die Platte/das Blech (9) Bohrungen (14, 15) aufweist, in denen die Enden der Bolzen einliegen.

8. Zahnriemen nach Anspruch 7, **dadurch gekennzeichnet, dass** der Abstand (A2) der beiden Bohrungen (14, 15) voneinander auf einer Seite eines der Platte/des Bleches (9) größer ist als der Abstand (A1) der einliegenden Bolzen vor der Befestigung der Platte/des Bleches.
